# EUROPÄISCHE PATENTSCHRIFT

(11) **EP 1 887 283 B1**
(45) Veröffentlichungstag und Bekanntmachung des Hinweises auf die Patenterteilung: **12.05.2010**
(21) Anmeldenummer: 07015082.6
(22) Anmeldetag: 01.08.2007
(51) Int. Cl.: F23N 1/00, F24C 3/12, F16K 1/44

(54) **Gasventil und Verfahren zur Ansteuerung eines Gasventils**
Gas valve and method for actuating a gas valve
Vanne de gaz et procédé destiné à la commande d'une vanne de gaz

(30) Priorität: 03.08.2006 DE 102006036294
(43) Veröffentlichungstag der Anmeldung: 13.02.2008
(73) Patentinhaber: Inter Control Hermann Köhler Elektrik GmbH & Co. KG, 90411 Nürnberg (DE); ISPHORDING Germany GmbH, 57439 Attendorn (DE)
(72) Erfinder: Eggebrecht, Frank, 90518 Altdorf (DE); Hoffeins, Peter, 91257 Pegnitz (DE); Koch, Jürgen, 57439 Attendorn (DE)
(74) Vertreter: Pätzold, Herbert

(56) Entgegenhaltungen:
- WO-A-01/50046
- WO-A-03/023282
- WO-A-2004/099669
- DE-B3- 10 318 569
- FR-A- 2 875 573

## Beschreibung

Die vorliegende Erfindung betrifft ein Gasventil und ein Verfahren zur elektrischen Ansteuerung eines Gasventils und insbesondere ein Gasventil und ein Verfahren zur Ansteuerung eines Gasventils, bei dem wenigstens eine Ventilstellung mittels der Ansteuerung erkannt wird.

Aus dem Stand der Technik sind eine Vielzahl von Gasventilen beispielsweise aus der DE 198 25 846 A1 insbesondere auch mit Vorrichtungen zum Sichern der Gasbrennstelle bekannt.

Für viele Anwendungen ist es wünschenswert ein elektrisch betriebenes Gasventil bereitzustellen, das auch ferngesteuert betrieben werden kann. Die DE 3787200 T2 offenbart beispielsweise ein Steuergerät für eine Gasströmung mit einer ein Ventilschließteil drehend antreibenden Motorantriebseinheit, die außerdem eine Positionsbestimmungseinheit mit einer auf einem Schaft des Schließteils angebrachten Positionssignal-Erzeugungseinrichtung und außerdem einer ein Signal von der Positionssignal-Erzeugungseinrichtung empfangenden Positionsbeurteilungsschaltung zur Beurteilung einer Drehposition des Schließteils umfasst.

Das bekannte Steuergerät umfaßt außerdem eine ein Zielpositionssignal und ein Drehpositionssignal von der Positionsbestimmungseinheit empfangende Antriebseinheit zum Anlagen eines Antriebssignals an die Motorantriebseinheit. Das bekannte Steuergerät mit der drehend antreibenden Motorantriebseinheit und der Positionsbestimmungseinheit und außerdem der Positionssignal-Erzeugungseinrichtung und der Positionsbeurteilungsschaltung ist jedoch aufwendig und dementsprechend kostspielig herzustellen.

Aus der WO 03/023282 A2 ist ein Verfahren zur Steuerung eines Gasventils mit einem Ventil bekannt, das von einem Linearantrieb angesteuert wird, der von einer Steuerung angetrieben wird, die durch Strom/Spannungsmessung die Öffnungs/Schließstellung des Ventils erkennt.

Ein elektronisches angesteuertes Doppelsitzventil für ein Gasventil ist beispielsweise jeweils aus der WO 2004/099669 A und der WO 01/50046 A bekannt.

Auch die vorstehend genannten Verfahren und Ventile sind wie das eingangs genannte aus der DE 198 25 846 A1 bekannte Verfahren ebenfalls erheblich aufwendig und dementsprechend kostspielig herzustellen.

Aufgabe der vorliegenden Erfindung ist daher ein zuverlässiges, sicheres, kostengünstiges, elektrisch betriebenes Gasventil bereitzustellen, das auch ferngesteuert getrieben werden kann. Hierbei ist außerdem Aufgabe der vorliegenden Erfindung ein einfaches, sicheres Verfahren zur elektrischen Ansteuerung eines Gasventils anzugeben.

Die Aufgabe wird mit den Merkmalen der Ansprüche gelöst. Vorteilhafte Ausführungen der Erfindung sind in den Merkmalen der Unteransprüche und/oder der nachfolgenden Beschreibung erwähnt.

Hierzu zeigt:
Fig. 1a einen schematischen Schnitt durch ein Gasventil und Fig. 1b und 1c das Stellglied des Gasventils in verschiedenen Schließ/Öffnungsstellungen;
Fig. 2a einen schematischen Schnitt durch ein Gasventil nach einer zweiten Ausführung der vorliegenden Erfindung, und Fig. 2b bis 2e das Stellglied des Gasventils in verschiedenen Schließ/Öffnungsstellungen;
Fig. 3 einen schematischen Schnitt durch ein Gasventil nach einer dritten Ausführung der vorliegenden Erfindung; und
Fig. 4 Stromaufnahme gegenüber Ventilposition bei dem Gasventil von Fig. 2 und 3.

Die vorliegende Erfindung betrifft insbesondere ein Verfahren zur Steuerung eines Gasventils mit einem Ventileinlaß und einem ersten Ventilauslaß und einem ersten Ventil, das den ersten Ventilauslaß schließt/öffnet und mit einem Linearantrieb, der von einer elektronischen Steuerung angesteuert wird, wobei der Linearantrieb über eine Antriebsachse das erste Ventil betätigt, und wobei das erste Ventil und der Linearantrieb derart ausgebildet und angeordnet sind, dass die elektronische Steuerung durch Strom/Spannungsmessung die Öffnungs/Schließstellung des Ventils bei Betätigung des Linerantriebs erkennt. Der Linearantrieb und die Antriebsachse können hierbei geeigneter Weise von einem Linearmotor mit einer Motorachse bereitgestellt werden, und die elektronische Steuerung kann geeigneter Weise und vorteilhaft mittels einem Mikrokontroller bereitgestellt werden.

Mit der vorteilhaften Vorsehung des Linearantriebs zur Ansteuerung eines Stellglieds in Zusammenwirken mit der elektronische Steuerung und der erfindungsgemäßen Erkennung der Position des Stellglieds durch Strom/Spannungsmessung des Linearantriebs wird auf einfache Weise ein sicheres Verfahren zur Steuerung eines Gasventils bereitgestellt, wobei das Gasventil kostengünstig hergestellt werden kann.

Das erfindungsgemäße Verfahren umfasst ein Gasventil mit einem zweiten Ventil das den Ventileinlaß schließt/öffnet, wobei der Linearantrieb mittels seiner Antriebsachse außerdem das zweite Ventil bei geschlossenem ersten Ventil öffnet, und die elektronische Steuerung durch Strom/Spannungsmessung die Öffnungs/Schließstellung des zweiten Ventils ebenfalls erkennt. Das zweite Ventil kann hierbei vorteilhaft ein Sicherungsventil sein, das eine dem Ventil nachgeordnete Gasbrennstelle vor unverbrannt ausströmenden Gas sichert.

Eine weitere vorteilhafte Ausführung der vorliegenden Erfindung betrifft außerdem ein Gasventil mit dem Ventileinlaß und dem ersten Ventilauslaß für die Gaszufuhr einer Hauptflamme und einem zweiten Ventilauslaß für die Gaszufuhr einer Nebenflamme, wobei das zweite Ventil vorteilhaft als Magnetventil ausgebildet sein kann, und wobei der Linearantrieb über seine Antriebsachse bei geöffnetem zweiten Ventil das erste Ventil regelt, und bei geschlossenem zweiten Ventil das zweite Ventil öffnet, wobei das erste Ventil geschlossen ist, und wobei die elektronische Steuerung mittels Strom/Spannungsmessung wenigstens eine Position der Antriebsachse des Linearantriebs erkennt, und damit die Stellung des ersten und zweiten Ventils erkennt.

Hierbei ist das erste und zweite Ventil und der Linearantrieb vorteilhaft derart ausgebildet und angeordnet, dass die elektronische Steuerung durch Strom/Spannungsmessung insbesondere die nachfolgenden Positionen seiner Antriebsachse erkennt:
Anschlag der Antriebsachse auf das zweite Ventil bei geschlossenem zweiten Ventil und/oder Betätigung des zweiten Ventils und/oder Anschlag der Antriebsachse an einen Anschlag des vollständig geöffneten zweiten Ventils
   und/oder
Anschlag der Antriebsachse an das geschlossene erste Ventil und/oder Betätigung des ersten Ventils und/oder Anschlag an einen Anschlag des vollständig geöffneten ersten Ventils.

Bei dem erfindungsgemäßen Verfahren sind das erste und zweite Ventil derart ausgebildet und angeordnet, dass sie in Gegenrichtung zueinander öffnen/schließen, wobei die Antriebsachse das Stellglied des ersten und zweiten Ventils gegen die Druckkraft einer jeweils an den Ventilen angeordneten Feder betätigt.

Der vorliegende Erfindung betrifft außerdem insbesondere ein Gasventil für das erfindungsgemäße Verfahren, wobei ein Ventilverschluß des ersten Ventils als Konus mit einer zentralen durchgehenden Bohrung ausgebildet ist, und zusammen mit einer Feder aufeinanderfolgend mit der Feder auf der Antriebsachse angeordnet ist, und von einer Arretierung am Ende der Antriebsachse gehalten wird, wobei die Feder, die Antriebsachse und der Konus derart ausgebildet sind, dass die Federkraft der Feder den ersten Ventilauslaß bei entsprechend angeordneter Antriebsachse verschließt, und die Antriebsachse bei entsprechender Ansteuerung das erste Ventil über die Arretierung als Anschlag auf den Konus gegen der Druckkraft der Feder öffnet / schließt.

Die vorliegende Erfindung wird nachfolgend anhand der schematischen Zeichnungen detailliert beschrieben.

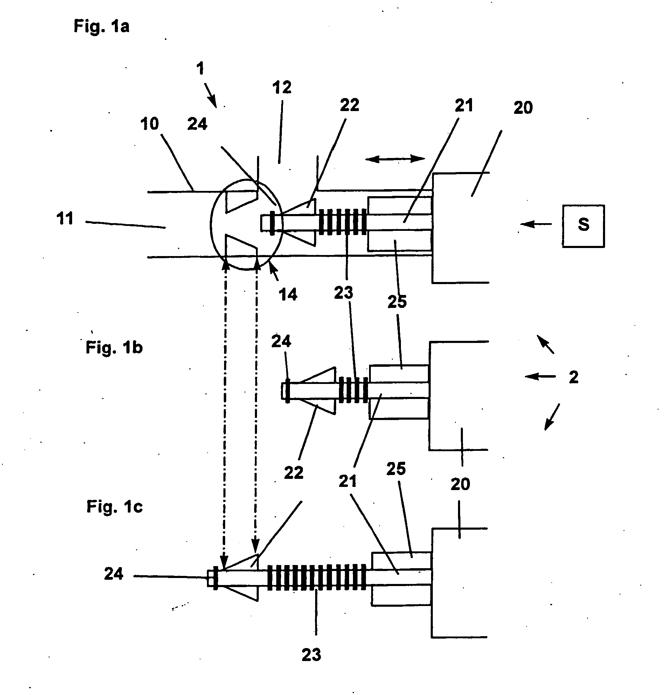

Fig. 1a zeigt einen schematischen Schnitt durch eines Gasventil 1 mit einem Ventilgehäuse 10 mit einem Ventileinlaß 11 und einem Ventilauslaß 12 und einem Ventil 14, das den Ventilauslaß 12 schließt/öffnet und mit einem Linearantrieb 2 der von einer elektronischen Steuerung S angesteuert wird, wobei der Linearantrieb 2 über seine Antriebsachse 21 das erste Ventil 14 betätigt. Hierbei sind das erste Ventil 14 und der Linearantrieb 2 derart ausgebildet und angeordnet, dass die elektronische Steuerung S durch Strom/Spannungsmessung die Öffnungs/Schließstellung des Ventils 14 erkennt. Hierbei kann der Linearantrieb 2 insbesondere vorteilhaft mittels einem Linearmotor und die Antriebsachse 21 mittels dessen Motorachse bereitgestellt werden, und die elektronische Steuerung S kann insbesondere mittels einem Mikrokontroller bereitgestellt sein.

Das Ventil 14 umfasst als Stellglied einen Konus 22, der zusammen mit einer Feder 23 und einem Dichtelement 25 in dieser Reihenfolge aufeinanderfolgend auf der Antriebsachse 21 angeordnet ist, und von einer geeigneten Arretierung 24 auf der Antriebsachse 21 gehalten wird.

Fig. 1b und 1c zeigen jeweils schematische Darstellungen des Linearantriebs 2 von Fig. 1a in verschiedenen Öffnungs- bzw. Schließstellungen des Ventils 14. In der geschlossenen Stellung von Fig. 1c übt die Feder 23 einen Druck auf den Konus 22 aus, so dass das Ventil geschlossen ist. Wird nun die Antriebsachse 21 nach rechts in der Zeichnung gegen die Schließstellung des Stellglieds gefahren, dann schlägt die Arretierung an dem Konus 22 an und übt einen Druck auf den Konus 22 aus, der gegen den wachsenden Federdruck der Feder 23 den Konus 22 bis in die Öffnungsstellung von Fig. 1b verschiebt.

Hierbei kann jeweils der Anschlag der Arretierung 24 an den Konus 22 und/oder die Schließstellung des Konus 22 und/oder ein Anschlag des Konus 22 bei Öffnungsstellung des Ventils 14 allein über Strom/Spannungsmessung des Linearantriebs 2 mittels der elektronische Steuerung S erkannt werden, so dass wenigstens eine definierte Stellung des Stellglieds des Ventils 14 mittels Betätigung des Linearantriebs 2 erkennbar ist.

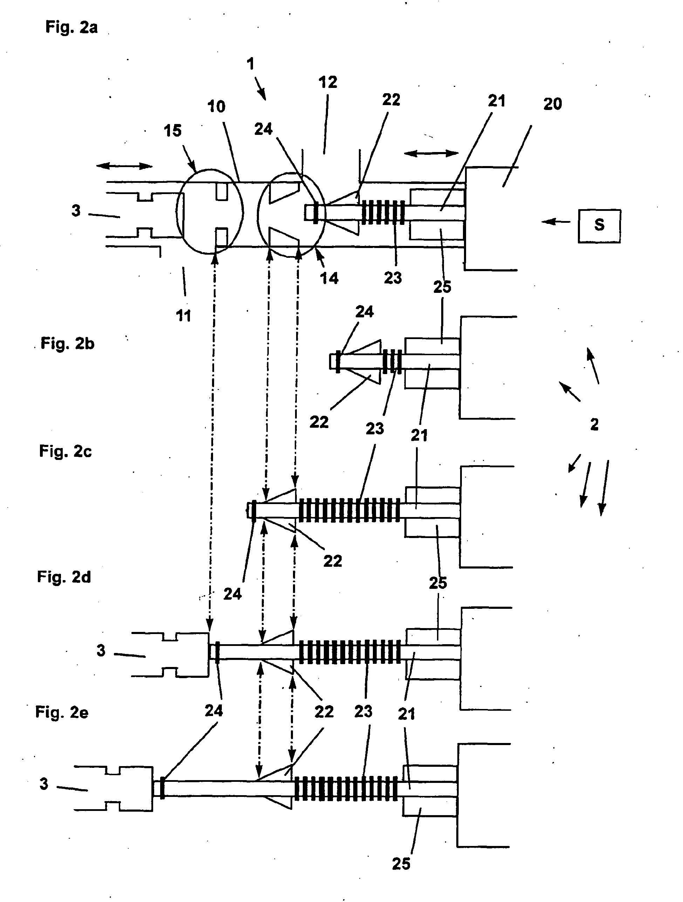

Fig. 2a zeigt einen schematischen Schnitt durch ein Gasventil 1 nach einer ersten Ausführung der vorliegenden Erfindung mit einem Ventileinlaß 11 und einem ersten Ventilauslaß 12 und einem ersten Ventil 14, das den ersten Ventilauslaß 12 schließt/öffnet und mit einem Linearantrieb 2, der von einer elektronischen Steuerung S angesteuert wird, wobei der Linearantrieb 2 über seine Antriebsachse 21 das erste Ventil 14 betätigt.

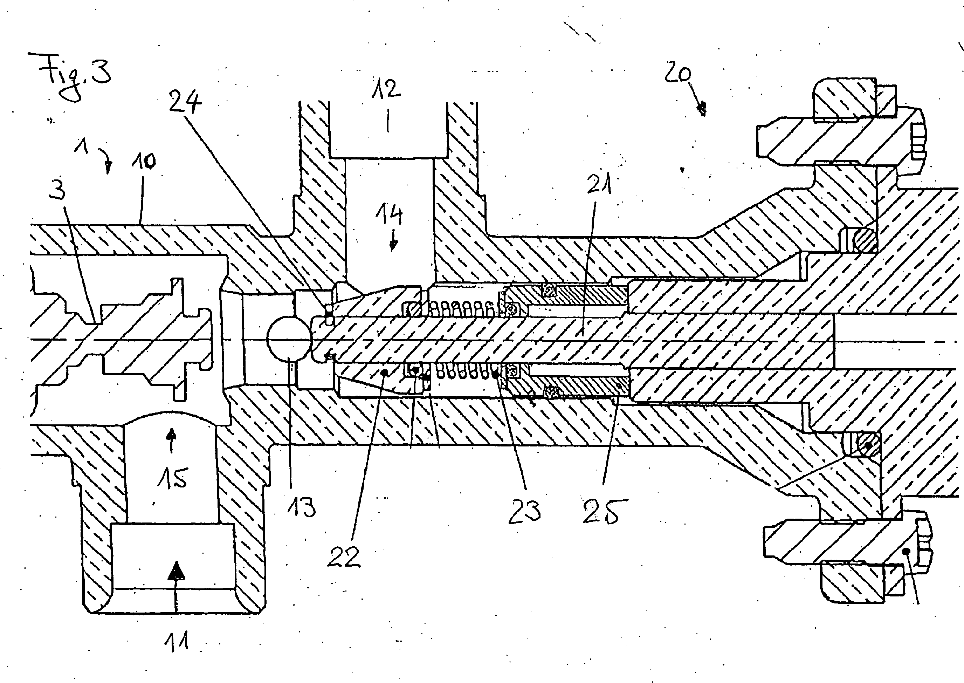

Es ist klar, dass hier wie bei der vorstehend beschriebenen ersten Ausführung und auch der nachfolgend anhand von Fig. 3 beschriebenen zweiten Ausführung der vorliegenden Erfindung der Linearantrieb 2 und seine Antriebsachse 21 geeigneter Weise mittels einem Linearmotor und seiner Motorachse bereitgestellt werden können, und die elektronische Steuerung S geeigneter Weise ebenfalls mittels einem Mikrokontroller bereitgestellt werden kann.

Die erste Ausführung der vorliegenden Erfindung umfasst außerdem ein zweites Ventil 15, das den Ventileinlaß 11 schließt/öffnet, wobei erfindungsgemäß der Linearantrieb 2 derart angeordnet und ausgebildet ist, das er mittels seiner Antriebsachse 21 außerdem das zweite Ventil 15 bei geschlossenem ersten Ventil 14 öffnet, wobei die elektronische Steuerung S durch Strom/Spannungsmessung die Öffnungs/Schließstellung des ersten 14 und zweiten 15 Ventils erkennt. Hierbei ist das zweite Ventil 15 derart ausgebildet, dass dessen Stellglied 3 ebenfalls mittels einer Feder in Schließstellung des Ventils 15 gedrückt wird.

Die Antriebsachse 21, das Dichtelement 25, die Feder 23, der Konus 22 und die Arretierung 24 der zweiten Ausführung der vorliegenden Erfindung sind ausgebildet und angeordnet wie bei der vorstehend beschriebenen ersten Ausführung der vorliegenden Erfindung.

Fig. 2b bis 2e zeigen den Linearantrieb 2 mit der Antriebsachse 21, dem Dichtelement 25, der Feder 23, dem Konus 22 und der Arretierung 24 jeweils in der Öffnungs/Schließstellung des ersten 14 und zweiten 15 Ventils.

Die schematisch in Fig. 2b und 2c dargestellte Betätigung des ersten Ventils 14 entspricht der vorstehend anhand von Fig. 1 beschriebenen Betätigung des Ventils 14 der ersten Ausführung der vorliegenden Erfindung.

Fig. 2d und 2e zeigen schematischen Darstellungen der Betätigung des Stellglieds 3 des zweiten Ventils 15 mittels der Antriebsachse 21, wobei die Antriebsachse 21 mit der Arretierung 24 in Schließstellung des ersten Ventils 14 in Richtung des zweiten Ventils 15 gefahren wird, wobei mittels Strom/Spannungsmessung des Antriebstroms erfindungsgemäß ebenfalls der Anschlag der Antriebsachse 21 gegen das Stellglied 3 des geschlossenen und/oder geöffneten zweiten Ventils 15 detektierbar ist. Hierbei ist besonders vorteilhaft, dass außerdem ein zunehmender Gegendruck der Feder 23 oder der zweiten in den Zeichnungen nicht dargestellten Feder des zweiten Ventils 15 beim Öffnen des ersten und/oder zweiten Ventils 14 und 15 ebenfalls durch Strom/Spannungsmessung von der elektronischen Steuerung S erkannt wird.

Es ist klar, daß bei entsprechend umgekehrter Anordnung des Stellglieds auf der Antriebsachse 21 entsprechend ein nachlassender Federdruck der Feder von der elektronischen Steuerung S des Linearantriebs 2 erkannt wird.

Bei der ersten Ausführung der vorliegenden Erfindung ist das zweite Ventil 15 geeigneter Weise als Sicherungsventil und geeigneter Weise als Magnetventil ausgebildet und angeordnet und wird geeigneter Weise über eine Flammüberwachungsvorrichtung und beispielsweise Ionisation oder Temperaturmessung angesteuert.

Fig. 3 zeigt einen schematischen Schnitt durch eine zweite Ausführung der vorliegenden Erfindung, die im wesentlichen der vorstehend beschriebenen ersten Ausführung der vorliegenden Erfindung entspricht, wobei gleiche / ähnliche Bauteile gleiche Bezugszeichen haben, mit dem Unterschied, dass das Ventil 1 neben dem ersten Ventilauslaß 12 einen zweiten Ventilauslaß 13 hat, der derart ausgebildet und angeordnet ist, das er unabhängig von der Stellung des ersten Ventils 14 immer geöffnet ist, und durch den lediglich bei geschlossenem Ventil 15, das den Ventileinlaß 11 verschließt, kein Gas ausströmt. Der zweite Ventilauslaß 13 kann für eine Nebenflamme und insbesondere für eine Pilotflamme verwendet werden.

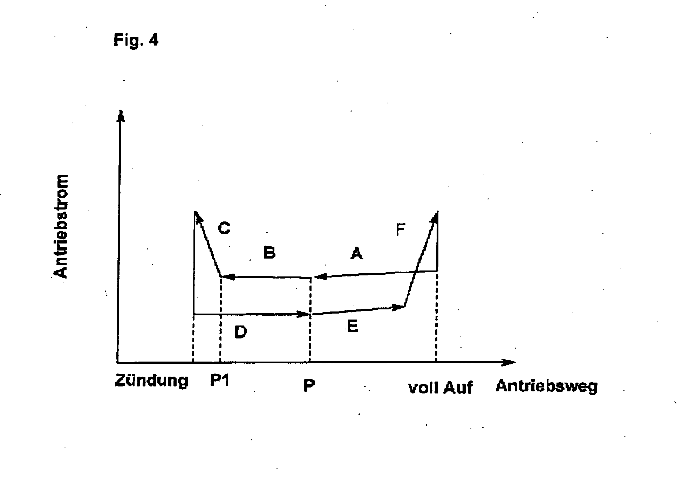

Fig. 4 zeigt eine schematische Darstellung des Antriebstroms in Abhängigkeit des Antriebswegs bei der ersten und zweiten Ausführung der vorliegenden Erfindung, wobei der Punkt P der Anschlag der Arretierung 24 an den Konus 22 des geschlossenen ersten Ventils 14 bei geöffnetem zweiten Ventil 13 und erfolgter Zündung repräsentiert, und der Weg E den wachsenden Gegendruck der Feder 23 darstellt und der Weg F den Anschlag der Antriebsachse an das vollständig geöffnete erste Ventil 14.

Beim Schließen des ersten Ventils 14 zeigt der Weg A den nachlassenden Druck der Feder 23 bis zu der Linie P, die den Anschlag des Konus 22 an die Schließstellung des ersten Ventils 14 repräsentiert, woraufhin der Weg B die konstante Reibung der Antriebsachse 21 zeigt, die über den Konus 22 hinaus in Richtung auf das geschlossene zweiten Ventil 15 fährt und in dem Punkt P1 auf das Stellglied 3 des zweiten Ventils 15 anschlägt. Der Weg C zeigt schließlich die Öffnung des zweiten Ventils 15 gegen den Gegendruck der Feder des zweiten Ventils 15.

Das zweite Ventil 15, das geeigneter Weise wie bei der vorstehend beschriebenen zweiten Ausführung der vorliegenden Erfindung als Sicherungsventil ausgebildet ist, umfaßt geeigneter Weise einen Magneten, der in Öffnungsstellung das zweite Ventil 15 bei hinreichendem beispielsweise Thermostrom eines Thermoelements das zweite Ventil 15 geöffnet hält, aber nicht genug Leistung hat, ein geschlossenes zweites Ventil 15 gegen den Druck seiner Feder zu öffnen.

Alternativ kann das zweite Ventil 15 auch als selbstanziehendes Magnetventil ausgebildet sein, wobei die Federkonstante der zweiten Feder und die Kraftwirkung des Magneten des zweiten Ventils 15 derart vorbestimmt sind, dass der Magnet das zweite Ventil 15 in geöffnetem Zustand halten kann und auch selbständig, öffnen kann, und die Druckkraft der zweiten Feder bei ausgeschaltetem Magneten und entsprechend angeordneter Antriebsachse 21 den Ventileinlaß 11 schließt.

Der Weg D vom Anschlag der Antriebsachse 21 an das vollständig geöffnete zweite Ventil 15 bis zu dem Anschlag der Arretierung 24 an das Stellglied, nämlich den Konus 22, des geschlossenen ersten Ventils 14 verläuft dann wieder bei konstanter Reibung und dementsprechend konstantem Antriebstrom.

Es ist klar, daß sich bei entsprechend umgekehrt angeordnetem ersten und / oder zweiten Ventil und / oder eine zusätzliche Arretierung der Feder auf der Achse in der Nähe des Antriebsanschlags jeweils Umkehrungen der jeweils zu bzw abnehmenden Federkräfte bei Öffnung/Schließung der Ventile ergeben, deren entsprechende Strom/Spannungswerte ebenfalls auf gleiche Weise vorteilhaft zur Positionsbestimmung der Ventilstellungen herangezogen werden können.

Die vorteilhafte Vorsehung des Linearantriebs 2 in Kombination mit der elektronischen Steuerung S ermöglicht auf einfache Weise eine automatische Erkennung wenigstens einer definierten Position der Stellung der Antriebsachse 21 und der Stellung des ersten und/oder zweiten Ventils 14 und 15.

Es ist außerdem klar, daß der zweite Ventilauslaß 13 der erfindungsgemäßen Ausführung von Fig. 3 entsprechend auch bei einem erfindungsgemäßen Ventil gemäß der Ausführung von Fig. 1 und 2 vorgesehen sein kann.

Das erfindungsgemäße Verfahren und das erfindungsgemäße Ventil 1 sind besonders geeignet zur sicheren Steuerung der Gaszufuhr einer Gasbrennstelle und insbesondere eines Herds oder Gaskamins.

### Bezugszeichenliste

- Gasventil: 1
- Ventilgehäuse: 10
- Ventileinlaß: 11
- Erster Ventilauslaß: 12
- Zweiter Ventilauslaß: 13
- Erstes Ventil: 14
- Zweites Ventil: 15
- Linearantrieb: 2
- Antriebsgehäuse: 20
- Antriebsachse: 21
- Konus: 22
- Feder: 23
- Arretierung: 24
- Dichtelement: 25
- Magnetventil, Stellglied: 3

## Patentansprüche

1. Verfahren zur Steuerung eines Gasventils (1) mit:
einem Ventileinlaß (11) und einem ersten Ventilauslaß (12) und einem ersten Ventil (14), das den ersten Ventilauslaß (12) schließt/öffnet; und einem Linearantrieb (2) der von einer elektronischen Steuerung (S) angesteuert wird, wobei der Linearantrieb (2) über eine Antriebsachse (21) das erste Ventil (14) betätigt, wobei:
das erste Ventil (14) und der Linearantrieb (2) sind derart ausgebildet und angeordnet, dass die elektronische Steuerung (S) durch Strom/Spannungsmessung des Linearantriebs die Öffnungs/Schließstellung des Ventils (14) erkennt,
**dadurch gekennzeichnet, dass**
ein zweites Ventil (15) verwendet wird, das den Ventileinlaß (11) schließt/öffnet, wobei der Linearantrieb (2) mittels der Antriebsachse (21) außerdem das zweite Ventil (15) bei geschlossenem ersten Ventil (14) öffnet, und die elektronische Steuerung (S) durch Strom/Spannungsmessung des Linearantriebs die Öffnungs/Schließstellung des zweiten Ventils (15) erkennt, und das erste (14) und zweite (15) Ventil öffnen/schließen in Gegenrichtung zu einander.

2. Verfahren nach Anspruch 1, mit:
dem Ventileinlaß (11) und dem ersten Ventilauslaß (12) für die Gaszufuhr einer Hauptflamme und mit einem zweiten Ventilauslaß (13) für die Gaszufuhr einer Nebenflamme.

3. Verfahren nach einem der Ansprüche 1 und 2, wobei:
das zweite Ventil (15) ist als Magnetventil ausgebildet und wird über eine Flammüberwachungseinrichtung der Haupt- und/oder Nebenflamme angesteuert.

4. Verfahren nach einem der Ansprüche 1 bis 3, wobei:
der Linearantrieb (2) regelt über seine Antriebsachse (21)
(a) bei geöffnetem zweiten Ventil (15) das erste Ventil (14), und
(b) öffnet bei geschlossenem zweiten Ventil (15) das zweite Ventil (15), wobei das erste Ventil (14) geschlossen ist, und wobei
die elektronische Steuerung mittels Strom/Spannungsmessung wenigstens eine Position der Antriebsachse (21) des Linearantriebs (2) erkennt, und damit die Stellung des ersten (14) und zweiten (15) Ventils erkennt.

5. Verfahren nach Anspruch 1 bis 4, wobei:
das erste (14) und zweite (15) Ventil und der Linearantrieb (2) sind derart ausgebildet und angeordnet, dass die elektronische Steuerung durch Strom/Spannungsmessung die nachfolgenden Positionen seiner Antriebsachse (21) erkennt:
- Anschlag der Antriebsachse (21) auf das zweite Ventil (15) bei geschlossenem zweiten Ventil (15) und/oder Betätigung des zweiten Ventils (15) und/oder Anschlag der Antriebsachse (21) an einen Anschlag des vollständig geöffneten zweiten Ventils (15);
und/oder
- Anschlag der Antriebsachse (21) an das geschlossene erste Ventil (14) und/oder Betätigung des ersten Ventils (14) und/oder Anschlag an einen Anschlag des vollständig geöffneten ersten Ventils (14).

6. Verfahren nach einem der Ansprüche 1 bis 5, wobei:
die Antriebsachse (21) betätigt das erste Ventil (14) gegen die Druckkraft einer Feder (23).

7. Verfahren nach einem der Ansprüche 1 bis 6, wobei:
das Ende der Antriebsachse (21) betätigt das zweite Ventil (15) gegen die Druckkraft einer an dem zweiten Ventil (15) angeordneten zweiten Feder, wobei die Federkonstante der zweiten Feder und die Kraftwirkung des Magneten des zweiten Ventils (15) derart vorbestimmt sind, dass der Magnet das zweite Ventil (15) in geöffnetem Zustand halten kann aber nicht selbständig öffnen kann, und die Druckkraft der zweiten Feder bei ausgeschaltetem Magneten und entsprechend angeordneter Antriebsachse (21) den Ventileinlaß (11) schließt.

8. Verfahren nach einem der Ansprüche 1 bis 7, wobei:
das Ende der Antriebsachse (21) betätigt das zweite Ventil (15), das als selbstanziehendes Magnetventil ausgebildet ist gegen die Druckkraft einer an dem zweiten Ventil (15) angeordneten zweiten Feder, wobei die Federkonstante der zweiten Feder und die Kraftwirkung des Magneten des zweiten Ventils (15) derart vorbestimmt sind, dass der Magnet das zweite Ventil (15) in geöffnetem Zustand halten kann und auch selbständig öffnen kann, und die Druckkraft der zweiten Feder bei ausgeschaltetem Magneten und entsprechend angeordneter Antriebsachse (21) den Ventileinlaß (11) schließt.

9. Verfahren nach einem der vorstehenden Ansprüche 1 bis 8, wobei
die elektronische Steuerung (S) wirkt mit einer Fernsteuerung zusammen.

10. Gasventil (1) für das Verfahren nach einem der Ansprüche 1 bis 9, mit:
einem Ventileinlaß (11) und einem ersten Ventilauslaß (12) und einem ersten Ventil (14), das derart ausgebildet ist, dass es den ersten Ventilauslaß (12) schließt/öffnet; und einem Linearantrieb (2) der von einer elektronische Steuerung (S) angesteuert wird, wobei der Linearantrieb (2) über eine Antriebsachse (21) das erste Ventil (14) betätigt, und
das erste Ventil (14) und der Linearantrieb (2) sind derart ausgebildet und angeordnet, dass die elektronische Steuerung (S) durch Strom/Spannungsmessung des Linearantriebs die Öffnungs/Schtießstellung des Ventils (14) erkennt, **dadurch gekennzeichnet, dass** das Gasventil mit einem zweiten Ventil (15) versehen ist, das derart ausgebildet ist, dass es den Ventileinlaß (11) schließt/öffnet, wobei der Linearantrieb (2) derart ausgebildet ist, dass er mittels der Antriebsachse (21) außerdem das zweite Ventil (15) bei geschlossenem ersten Ventil (14) öffnet, und die elektronische Steuerung (S) durch Strom/Spannungsmessung des Linearantriebs die Öffnungs/Schließstellung des zweiten Ventils (15) erkennt, und wobei das erste und zweite Ventil derart ausgebildet sind, dass sie in Gegenrichtung zu einander öffnen/schliessen.

11. Gasventil (1) nach Anspruch 10, wobei:
ein Stellglied des ersten Ventils (14) als Konus (22) mit einer zentralen durchgehenden Bohrung ausgebildet ist und zusammen mit einer Feder (23) aufeinanderfolgend mit der Feder (23) auf der Antriebsachse (21) angeordnet ist, und der Konus (22) und die Feder (23) von einer Arretierung (24) am Ende der Antriebsachse (21) gehalten werden; wobei
die Feder (23), die Antriebsachse (21) und der Konus (22) sind derart ausgebildet, dass die Federkraft der Feder (23) den ersten Ventilauslaß (12) bei entsprechend angeordneter Antriebsachse (21) verschließt, und die Antriebsachse (21) bei entsprechender Ansteuerung das erste Ventil (14) über eine Arretierung (24) als Anschlag auf den Konus (22) entgegen der Druckkraft der Feder (23) öffnet.

12. Gasventil (1) nach Anspruch 10 bis 11, wobei:
ein Stellglied (3) des zweiten Ventils (15) ist als Magnetventil ausgebildet.

13. Verwendung des Verfahrens nach einem der Ansprüche 1 bis 9 und des Gasventils (1) nach einem der Ansprüche 10 bis 12 zur Steuerung einer Gasbrennflamme und insbesondere zur Steuerung eines Herds oder Gaskamins.

## Claims

1. Method for controlling a gas valve (1) having:
a valve inlet (11) and a first valve outlet (12) and a first valve (14) which closes/opens the first valve outlet (12); and a linear drive (2) which is actuated by an electronic controller (S), wherein the linear drive (2) activates the first valve (14) by means of a drive axle (21), wherein:
the first valve (14) and the linear drive (2) are embodied and arranged in such a way that the electronic controller (S) detects the open/closed position of the valve (14) by measuring current/voltage of the linear drive (2);
**characterised in that**
a second valve (15) is used which closes/opens the valve inlet (11), wherein the linear drive (2) also opens the second valve (15) by means of the drive axle (21) when the first valve (14) is closed, and the electronic controller (S) detects the open/closed position of the second valve (15) by measuring current/voltage of the linear drive and the first (14) and the second (15) valve close/open in the opposite direction to each other.

2. Method according to Claim 1, having:
the valve inlet (11) and the first valve outlet (12) for supplying gas to a main flame, and having a second valve outlet (13) for supplying gas to a secondary flame.

3. Method according to one of Claims 1 and 2, wherein:
the second valve (15) is embodied as a solenoid valve and is actuated by means of a flame monitoring device of the main flame and/or secondary flame.

4. Method according to one of Claims 1 to 3, wherein:
the linear drive (2) controls, by means of its drive axle (21),
(a) the first valve (14) when the second valve (15) is opened, and
(b) when the second valve (15) is closed said linear drive (2) opens the second valve (15), in which case the first valve (14) is closed, and wherein
the electronic controller detects at least one position of the drive axle (21) of the linear drive (2) by measuring current/voltage, and thus detects the position of the first valve (14) and second valve (15).

5. Method according to Claims 1 to 4, wherein:
the first valve (14) and second valve (15) and the linear drive (2) are embodied and arranged in such a way that by measuring current/voltage the electronic controller detects the following positions of its drive axle (21):
- abutment of the drive axle (21) against the second valve (15) when the second valve (15) is closed, and/or activation of the second valve (15) and/or abutment of the drive axle (21) against a stop of the completely opened second valve (15);
and/or
- abutment of the drive axle (21) against the closed first valve (14) and/or activation of the first valve (14) and/or abutment against a stop of the completely opened first valve (14).

6. Method according to one of Claims 1 to 5, wherein:
the drive axle (21) activates the first valve (14) counter to the pressure force of a spring (23).

7. Method according to one of Claims 1 to 6, wherein:
the end of the drive axle (21) activates the second valve (15) counter to the pressure force of a second spring which is arranged on the second valve (15), wherein the spring constant of the second spring and the force effect of the magnet of the second valve (15) are predetermined in such a way that the magnet can hold the second valve (15) in the opened state but cannot open it automatically, and
the pressure force of the second spring closes the valve inlet (11) when the magnet is switched off and the drive axle (21) is arranged correspondingly.

8. Method according to one of Claims 1 to 7, wherein:
the end of the drive axle (21) activates the second valve (15), which is embodied as a self-priming solenoid valve, counter to the pressure force of a second spring which is arranged on the second valve (15), wherein the spring constant of the second spring and the force effect of the magnet of the second valve (15) are predetermined in such a way that the magnet can hold the second valve (15) in the opened state and can also open it automatically, and
the pressure force of the second spring closes the valve inlet (11) when the magnet is switched off and the drive axle (21) is arranged correspondingly.

9. Method according to one of the preceding Claims 1 to 8, wherein
the electronic controller (S) interacts with a remote controller.

10. Gas valve (1) for the method according to one of Claims 1 to 9, having:
a valve inlet (11) and a first valve outlet (12) and a first valve (14) which is embodied in such a way that it closes/opens the first valve outlet (12); and a linear drive (2) which is actuated by an electronic controller (S), wherein the linear drive (2) activates the first valve (14) by means of a drive axle (21), and
the first valve (14) and the linear drive (2) are embodied and arranged in such a way that the electronic controller (S)of the linear valve detects the open/closed position of the valve (14) by measuring current/voltage of the linear drive (2);
**characterised in that**
a second valve (15) which is embodied in such a way that it closes/opens the valve inlet (11), wherein the linear drive (2) is embodied in such a way that when the first valve (14) is closed said linear drive (2) also opens the second valve (15) by means of the drive axle (21), and the electronic controller (S) detects the open/closed position of the second valve (15) by measuring current/voltage of the linear drive (2) and whereby the first(14) and the second (15) valve are arranged in such a way, that they close/open in the opposite direction to each other.

11. Gas valve (1) according to Claim 10, wherein:
an actuator element of the first valve (14) is embodied as a cone (22) with a central, continuous bore, and is arranged together with a spring (23) in a series arrangement with the spring (23) on the drive axle (21), and the cone (22) and the spring (23) are held via a locking means (24) at the end of the drive axle (21); wherein
the spring (23), the drive axle (21) and the cone (22) are embodied in such a way that the spring force of the spring (23) closes the first valve outlet (12) when the drive axle (21) is arranged correspondingly, and the drive axle (21) opens the first valve (14) by means of a locking means (24) as a stop against the cone (22) counter to the pressure force of the spring (23) when corresponding actuation occurs.

12. Gas valve (1) according to Claims 12 to 11, wherein:
an actuator element (3) of the second valve (15) is embodied as a solenoid valve.

13. Use of the method according to one of Claims 1 to 9 and of the gas valve (1) according to one of Claims 10 to 12 for controlling a gas burning flame and in particular for controlling a cooker or gas stove.

## Revendications

1. Procédé de commande d'une vanne de gaz (1) avec :
Une entrée de vanne (11) et une première sortie de vanne (12) et une première vanne (14) qui ouvre et ferme la première sortie de vanne (12), et un moteur linéaire (2) commandé par une commande électronique (S), sachant que le moteur linéaire (2) actionne la première vanne (14) par le biais d'un axe d'entraînement (21), sachant que
La première vanne (14) et le moteur linéaire (2) sont conçus et agencés de telle sorte que la commande électronique (S) reconnaisse la position ouverte / fermée de la vanne (14) par le biais d'un courant électrique / d'une mesure de tension du moteur linéaire,
**caractérisé en ce que**
une deuxième vanne (15) est utilisée, laquelle ferme / ouvre l'entrée de la vanne (11), sachant que le moteur linéaire (2) ouvre par ailleurs la deuxième vanne (15) par le biais de l'axe d'entraînement (21) lorsque la première vanne (14) est fermée et que la commande électronique (S) reconnaît la position ouverte / fermée de la deuxième vanne (15) par le biais d'un courant électrique / d'une mesure de tension du moteur linéaire et que la première (14) et la deuxième (15) vanne s'ouvre / se ferment à l'opposé l'une de l'autre.

2. Procédé selon la revendication 1, avec :
L'entrée de vanne (11) et la première sortie de vanne (12) pour l'approvisionnement en gaz d'une flamme principale et avec une deuxième sortie de vanne (13) pour l'approvisionnement en gaz d'une flamme auxiliaire.

3. Procédé selon l'une des revendications 1 et 2, sachant que :
La deuxième vanne (15) consiste en une vanne magnétique et qu'elle est commandée par un dispositif de surveillance de flamme de la flamme principale et/ou auxiliaire.

4. Procédé selon l'une des revendications 1 à 3, sachant que :
Par le biais de son axe d'entraînement (21), le moteur linéaire (2)
(a) régule la première vanne (15) lorsque la deuxième vanne (15) est fermée, et
(b) ouvre la deuxième vanne (15) lorsque la deuxième vanne (15) est fermée, sachant que la première vanne (14) est fermée et sachant que
la commande électronique reconnaît au moins une position de l'axe d'entraînement (21) du moteur linéaire par le biais d'un courant électrique / d'une mesure de tension et reconnaît ainsi la position de la première (14) et de la deuxième (15) vanne.

5. Procédé selon la revendication 1 à 4, sachant que :
La première (14) et la deuxième (15) vanne et le moteur linéaire (2) sont conçus et agencés de telle sorte que par le biais d'un courant électrique / d'une mesure de tension la commande électronique reconnaît les positions de son axe d'entraînement (21) suivantes:
- butée de l'axe d'entraînement (21) sur la deuxième vanne (15) lorsque la deuxième vanne (15) est fermée et/ou actionnement de la deuxième vanne (15) et/ou butée de l'axe d'entraînement (21) contre une butée de la deuxième vanne (15) entièrement ouverte ;
et/ou
- butée de l'axe d'entraînement (21) contre la première vanne (14) fermée et/ou actionnement de la première vanne (14) et/ou butée contre une butée de la première vanne (14) entièrement ouverte.

6. Procédé selon l'une des revendications 1 à 5, sachant que :
L'axe d'entraînement (21) actionne la première vanne (14) contre la force de pression d'un ressort (23).

7. Procédé selon l'une des revendications 1 à 6, sachant que :
L'extrémité de l'axe d'entraînement (21) actionne la deuxième vanne (15) contre la force de pression d'un deuxième ressort disposé sur la deuxième vanne (15), sachant que la constance de ressort du deuxième ressort et l'action de la force de l'aimant de la deuxième vanne (15) sont programmées de telle sorte que l'aiment puisse maintenir la deuxième vanne (15) en position ouverte mais ne peut ouvrir de façon autonome, et que la force de pression du deuxième ressort ferme l'entrée de vanne (11) lorsque l'aimant est désactivé et que l'axe d'actionnement (21) est en position correspondante.

8. Procédé selon l'une des revendications 1 à 7, sachant que :
L'extrémité de l'axe d'entraînement (21) actionne la deuxième vanne (15) qui est conçue comme vanne magnétique auto-aimantée contre la force de pression d'un deuxième ressort disposé sur la deuxième vanne (15), sachant que la constance de ressort du deuxième ressort et l'effet de la force de l'aimant de la deuxième vanne (15) sont programmées de telle sorte que l'aimant puisse maintenir la deuxième vanne (15) en position ouverte et peut aussi ouvrir de façon autonome, et que la force de pression du deuxième ressort ferme l'entrée de vanne (11) lorsque l'aimant est désactivé et que l'axe d'entraînement (21) est en position correspondante.

9. Procédé selon l'une des revendications précédentes 1 à 8, sachant que
La commande électronique (S) agit de concours avec une télécommande.

10. Vanne de gaz (1) pour le procédé conforme à l'une des revendications 1 à 9, avec :
Une entrée de vanne (11) et une première sortie de vanne (12) et une première vanne (14) qui est conçue de telle sorte qu'elle ouvre / ferme la première sortie de vanne (12) et avec un moteur linéaire (2) qui est commandé par une commande électronique (S), sachant que le moteur linéaire (2) actionne la première vanne (14) par le biais d'un axe d'entraînement (21), et
La première vanne (14) et le moteur linéaire (2) sont conçus et agencés de telle sorte que la commande électronique (S) reconnaisse la position ouverte / fermée de la vanne (14) par le biais d'un courant électrique / d'une mesure de tension du moteur linéaire (2), **caractérisé en ce que** la vanne de gaz est pourvue d'une deuxième vanne (15) qui est conçue de telle sorte qu'elle ouvre / ferme l'entrée de vanne (11), sachant que le moteur linéaire (2) est conçu de telle sorte qu'il ouvre de plus la deuxième vanne (15) par le biais de l'axe d'entraînement (21) lorsque la première vanne (14) est fermée et que la commande électronique (S) reconnaisse la position ouverte / fermée de la deuxième vanne (15) par le biais d'un courant électrique / d'une mesure de tension du moteur linéaire (2) et sachant que la première (14) et la deuxième (15) vanne sont conçues de telle sorte qu'elles s'ouvrent / se ferment à l'opposée l'une de l'autre.

11. Vanne de gaz (1) selon la revendication 10, sachant que :
un organe de réglage de la première vanne (14) est conçu comme un cône (22) avec une perforation centrale et est disposé de concours avec un ressort (23) à la suite du ressort (23) sur l'axe d'entraînement (21) et le cône (22) et le ressort (23) sont maintenus par un mécanisme d'arrêt (24) à l'extrémité de l'axe d'entraînement (21) ; sachant que
Le ressort (23), l'axe d'entraînement (21) et le cône (22) sont conçus de telle sorte que la force de ressort du ressort (23) ferme la première sortie de vanne (12) lorsque l'axe d'entraînement (21) est en position correspondante et que lors d'une commande correspondante, l'axe d'entraînement (21) ouvre la première vanne (14) par le biais d'un mécanisme d'arrêt (24) servant de butée sur le cône (22) contre la force de pression du ressort (23).

12. Vanne de gaz (1) selon les revendications 10 et 11, sachant que :
un organe de réglage (3) de la deuxième vanne (15) consiste en une vanne magnétique.

13. Utilisation du procédé conforme à l'une des revendications 1 à 9 et de la vanne de gaz (1) conforme à l'une des revendications 10 à 12 pour la commande d'une flamme de gaz et en particulier pour la commande d'une gazinière ou d'un insert au gaz.
